# EUROPEAN PATENT APPLICATION

(11) **EP 4 574 239 A1**
(43) Date of publication of application: **25.06.2025**
(21) Application number: 24215276.7
(22) Date of filing: 25.11.2024
(51) Int. Cl.: B01D 53/04, F02C 6/10

(54) **SYSTEM AND METHOD FOR SORBENT-BASED GAS CAPTURE USING HEAT PIPES**

(30) Priority: 18.12.2023 IN 202311086527
(71) Applicant: General Electric Technology GmbH, 5400 Baden (CH)
(72) Inventor: THANGANADAR, Dhinesh, 560066 Bengaluru (IN); JANKOWSKI, Todd Andrew, Niskayuna, 12309-1027 (US); DE, Anindya Kanti, 560066 Bengaluru (IN); PAL, Subrata, 560066 Bengaluru (IN)
(74) Representative: Dittmann, Rolf

(57) **Abstract**

A system includes a gas capture system having an adsorber with a sorbent material, wherein the adsorber is configured to adsorb an undesirable gas from a gas flow into the sorbent material in an adsorption mode, and desorb the undesirable gas from the sorbent material in a desorption mode. The gas capture system further includes at least one heat pipe configured to transfer heat away from the sorbent material during the adsorption mode.

## Description

### BACKGROUND

The present application relates generally to a system and method for capturing undesirable gases associated with a combustion system, such as a combustion-driven power plant.

An industrial plant, such as a combustion-driven power plant, may produce a variety of gases, such as an exhaust gas of a combustion system. The combustion system may include a gas turbine engine, a reciprocating piston-cylinder engine, a furnace, a boiler, or other industrial equipment. These exhaust gases may include one or more undesirable gases, such as acid gases and/or greenhouse gases. For example, the undesirable gases may include carbon oxides (COx) such as carbon dioxide (CO₂) and carbon monoxide (CO), nitrogen oxides (NOx) such as nitrogen dioxide (NO₂), and/or sulfur oxides (SOx) such as sulfur dioxide (SO₂). CO₂ is both an acid gas and a greenhouse gas. Unfortunately, the atmospheric content of CO₂ has generally increased over thousands of years, and currently exceeds about 420 parts per million by volume (ppmv) or 643 parts per million by weight (ppmw) in the atmosphere. With various regulations and environmental concerns regarding global warming, it would be desirable to reduce the output of undesirable gases (e.g., CO₂) into the atmosphere, particularly for hydrocarbon fuel consuming equipment such as combustion systems.

### BRIEF DESCRIPTION

Certain embodiments commensurate in scope with the originally claimed subject matter are summarized below. These embodiments are not intended to limit the scope of the claimed embodiments, but rather these embodiments are intended only to provide a brief summary of possible forms of the subject matter. Indeed, the presently claimed embodiments may encompass a variety of forms that may be similar to or different from the embodiments set forth below.

In certain embodiments, a system includes a gas capture system having an adsorber with a sorbent material, wherein the adsorber is configured to adsorb an undesirable gas from a gas flow into the sorbent material in an adsorption mode, and desorb the undesirable gas from the sorbent material in a desorption mode. The gas capture system further includes at least one heat pipe configured to transfer heat away from the sorbent material during the adsorption mode.

In certain embodiments, a system includes a controller having a processor, a memory, and instructions stored on the member and executable by the processor to control a gas capture system having an adsorber to adsorb an undesirable gas from a gas flow into a sorbent material of the adsorber in an adsorption mode, wherein at least one heat pipe is configured to transfer heat away from the sorbent material during the adsorption mode. The processor is further configured to control the gas capture system to desorb the undesirable gas from the sorbent material in a desorption mode.

In certain embodiments, a method includes adsorbing an undesirable gas from a gas flow into a sorbent material of an adsorber of a gas capture system in an adsorption mode, wherein at least one heat pipe is configured to transfer heat away from the sorbent material during the adsorption mode. The method further includes desorbing the undesirable gas from the sorbent material in a desorption mode.

### BRIEF DESCRIPTION OF THE DRAWINGS

These and other features, aspects, and advantages of the presently disclosed techniques will become better understood when the following detailed description is read with reference to the accompanying drawings in which like characters represent like parts throughout the drawings, wherein:
FIG. 1 is a block diagram of an embodiment of a combined cycle system having one or more gas capture systems.
FIG. 2 is a schematic of an embodiment of the gas capture system of FIG. 1, further illustrating an adsorption mode of a sorbent-based gas capture system having a sorbent-based gas capture unit or adsorber with a heat pipe array.
FIG. 3 is a schematic of an embodiment of the gas capture system of FIG. 1, further illustrating a desorption mode of the sorbent-based gas capture system of FIG. 2.
FIG. 4 is a schematic of an embodiment of the gas capture system of FIG. 1, further illustrating a desorption mode of the sorbent-based gas capture system of FIG. 2.
FIG. 5 is a schematic of an embodiment of a heat pipe of the sorbent-based gas capture system of FIGS. 2-4, further illustrating an operating cycle of the heat pipe.
FIG. 6 is a flow chart of an embodiment of a process for capturing an undesirable gas using the sorbent-based gas capture system of FIGS. 2 and 3.
FIG. 7 is a flow chart of an embodiment of a process for capturing an undesirable gas using the sorbent-based gas capture system of FIGS. 2 and 4.

### DETAILED DESCRIPTION

One or more specific embodiments of the presently disclosed systems and methods are described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the presently disclosed embodiments, the articles "a," "an," "the," and "said" are intended to mean that there are one or more of the elements. The terms "comprising," "including," and "having" are intended to be inclusive and mean that there may be additional elements other than the listed elements.

The disclosed embodiments include systems and methods to reduce the carbon footprint of combustion systems, such as combustion-driven power plants and/or combined cycle power plants, using a gas treatment system having one or more gas capture systems. The gas capture systems are configured to remove undesirable gases (e.g., CO₂) from the exhaust gas of the combustion systems. In the disclosed embodiments, the gas capture systems include heat pipes configured to help transfer heat during various operating modes.

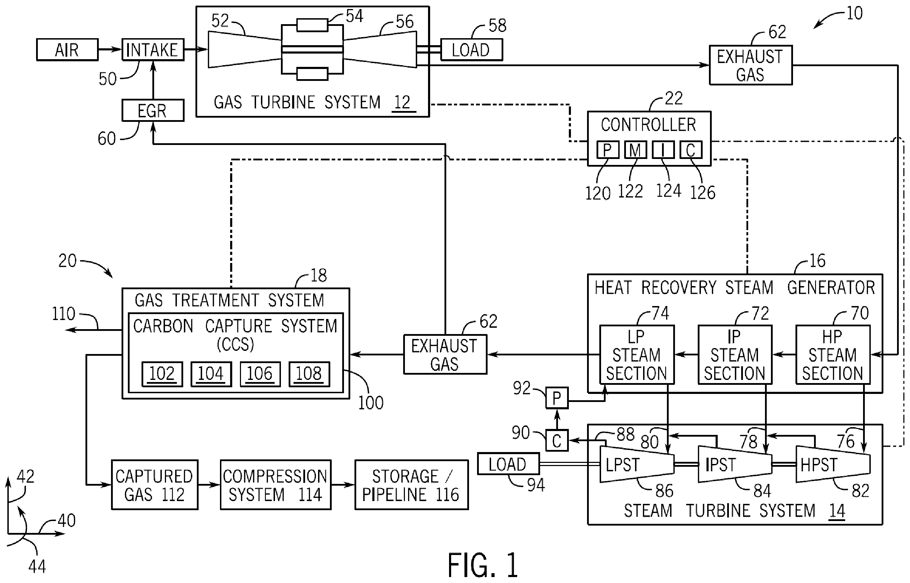

FIG. 1 is a block diagram of an embodiment of a combined cycle system 10 having a gas turbine system 12, a steam turbine system 14, a heat recovery steam generator (HRSG) 16, a gas treatment system 18 having one or more gas capture systems 20, and a controller 22 coupled to each of the systems 12, 14, 16, and 18. As discussed below, the one or more gas capture systems 20 of the gas treatment system 18 are configured to capture an undesirable gas (e.g., CO₂) from exhaust gas and/or air (e.g., direct air capture), wherein one or more heat pipes are configured to improve the gas capture process.

Before discussing details of the gas treatment system 18, various aspects of the combined cycle system 10 are discussed in further detail. For purposes of orientation in the drawings, reference may be made to an axial direction or axis 40, a radial direction or axis 42 extending radially away from the axial direction or axis 40, and a circumferential direction or axis 44 extending circumferentially around the axial direction or axis 40. The directions or axes 40, 42, and 44 may be in reference to a rotational axis 36 of the gas turbine system 12, for example.

The gas turbine system 12 includes an air intake 50, a compressor 52 having one or more compressor stages, one or more combustors 54, a turbine 56 having one or more turbine stages, and a load 58 (e.g., electrical generator) driven by the turbine 56. In certain embodiments, the gas turbine system 12 further includes an exhaust gas recirculation (EGR) system 60 configured to recirculate an exhaust gas 62 into the air intake 50. The recirculated exhaust gas 62 helps to reduce the temperature and formation of certain emissions (e.g., nitrogen oxides (NOx)) associated with combustion in the combustors 54. In operation, the compressor 52 receives air (and also exhaust gas 62 if the EGR system 60 is active) from the air intake 50, and compresses the air and/or exhaust gas 62 in one or more compressor stages (e.g., stages of rotating compressor blades). The combustors 54 then combust fuel from a fuel supply system with the compressed air and/or exhaust gas, and generate hot combustion gases. The hot combustion gases expand and drive one or more turbine stages (e.g., stages of rotating turbine blades) in the turbine 56, thereby driving rotation of the compressor 52 and the load 58 via shafts. The turbine 56 then outputs the hot combustion gases as the exhaust gas 62.

The HRSG 16 recovers waste heat from the exhaust gas 62 to generate steam for driving the steam turbine system 14. The HRSG 16 includes a highpressure (HP) steam section 70, an intermediate-steam (IP) section 72, and a low-pressure (LP) steam section 74 configured to generate HP steam 76, IP steam 78, and LP steam 80. The steam turbine system 14 may include an HP steam turbine 82 driven by the HP steam 76, an IP steam turbine 84 driven by the IP steam 78, and a LP steam turbine 86 driven by the LP steam 80. In addition to the steam provided by the HRSG 16, the HP steam turbine 82 provides IP steam to the IP steam turbine 84, and the IP steam turbine 84 provides LP steam to the LP steam turbine 86. The LP steam turbine 86 then outputs any remaining steam/water to a condensate line 88 coupled to the LP steam section 74 of the HRSG 16. The condensate line 88 may include a condenser 90 configured to condense any remaining steam to form a condensate, and a pump 92 configured to pump the condensate back to the LP steam section 74. In operation, the steam turbine system 14 drives a load 94 (e.g., electrical generator) via a shaft. In certain embodiments, the steam turbine system 14 and/or the HRSG 16 may provide heated water and/or steam (e.g., HP steam 76, IP steam 78, and/or LP steam 80) to the gas treatment system 18 to support a desorption mode of the one or more gas capture systems 20. For example, the gas capture systems 20 may receive heated water and/or steam in a temperature range of 100 to 150 degrees Celsius, 110 to 150 degrees Celsius, 120 to 150 degrees Celsius, or 130 to 150 degrees Celsius.

After the HRSG 16, the exhaust gas 62 may flow to the EGR system 60 and/or the gas treatment system 18. In the illustrated embodiment, the exhaust gas 62 flows through one or more gas capture systems 20 configured to capture undesirable gases. The undesirable gases may include carbon oxides (COx) (e.g., carbon dioxide (CO₂) and carbon monoxide (CO)), nitrogen oxides (NOx) (e.g., nitrogen dioxide (NO₂)), sulfur oxides (SOx) (e.g., sulfur dioxide (SO₂)), or any combination thereof. In the following discussion, CO₂ may be used as an example of the undesirable gases; however, the gas capture systems 20 may be designed to capture any of the foregoing undesirable gases. For example, the gas capture systems 20 include one or more carbon capture systems 100 (e.g., CO₂ capture systems). The gas capture systems 20 (e.g., carbon capture systems 100) may include sorbent-based gas capture systems, solvent-based gas capture systems, cryogenic gas capture systems, or any combination thereof, configured to remove and capture undesirable gases. The carbon capture system 100 may include components 102, 104, 106, and 108 configured to enable gas capture of undesirable gases (e.g., CO₂) from the exhaust gas 62, thereby outputting a treated gas 110 and a captured gas 112 (e.g., CO₂). The treated gas 110 may be substantially free of the undesirable gases (e.g., CO₂) and may be discharged through an exhaust stack. The captured gas 112 (e.g., CO₂) may be compressed by a compression system 114 and stored and/or transported by a storage and/or pipeline system 116.

In certain embodiments, the carbon capture system 100 is a sorbent-based carbon capture system, and the components 102, 104, 106, and/or 108 include multiple sorbent-based carbon capture units (e.g., adsorbers). For example, the sorbent-based carbon capture units may include temperature swing adsorption (TSA) units or adsorbers, wherein a temperature swing or change is used to sequentially operate in an adsorption mode, a desorption mode, and a cooling mode at different temperatures. In the adsorption mode, the adsorber is configured to adsorb undesirable gases (e.g., CO₂) into sorbent material at a first temperature. In the desorption mode, the adsorber is configured to desorb the undesirable gases (e.g., CO₂) from the sorbent material, for example, by heating the sorbent material from the first temperature to a higher second temperature using a heat source. The heat source may include a heated fluid, such as a heated gas and/or liquid (e.g., steam). In the cooling mode, the adsorber is cooled in preparation for the next adsorption mode.

In certain embodiments, the carbon capture system 100 is a solvent-based carbon capture system, and the components 102, 104, 106, and/or 108 include one or more absorbers, strippers, and associated equipment. For example, the absorber is configured to absorb undesirable gases (e.g., CO₂) into a solvent, thereby outputting the treated gas 110 through an exhaust stack and a CO₂-rich solvent to the stripper. The stripper is configured to apply heat to the CO₂-rich solvent, thereby stripping the undesirable gases (e.g., CO₂) from the solvent to produce the captured gas 112 and a CO₂-lean solvent. The stripper may receive heat via a heat source, such as a heated gas and/or liquid (e.g., steam). The stripper returns the CO₂-lean solvent to the absorber to repeat the cycle.

In the illustrated embodiment, the controller 22 is configured to control all aspects of the combined cycle system 10. The controller 22 includes one or more processors 120, memory 122, instructions 124 stored on the memory 122 and executable by the processor 120, and communication circuitry 126 configured to communicate with sensors and various equipment of the combined cycle system 10. For example, the controller 22 is configured to receive sensor feedback from sensors coupled to the gas turbine system 12, the steam turbine system 14, the HRSG 16, and the gas treatment system 18 (e.g., gas capture systems 20), and control the same equipment based on the sensor feedback, operating modes, user input, computer models, or any combination thereof. The sensors may include temperature sensors, pressure sensors, flow rate sensors, gas composition sensors, or any combination thereof. In certain embodiments, the controller 22 is configured to control operation of the gas capture systems 20 (e.g., carbon capture systems 100), such by controlling modes of operation (e.g., adsorption mode, desorption mode, and cooling mode), controlling heat sources for supplying heated fluid (e.g., steam) to the gas capture systems 20, controlling cooling sources for supply cooled fluids to the gas capture systems 20, or any combination thereof.

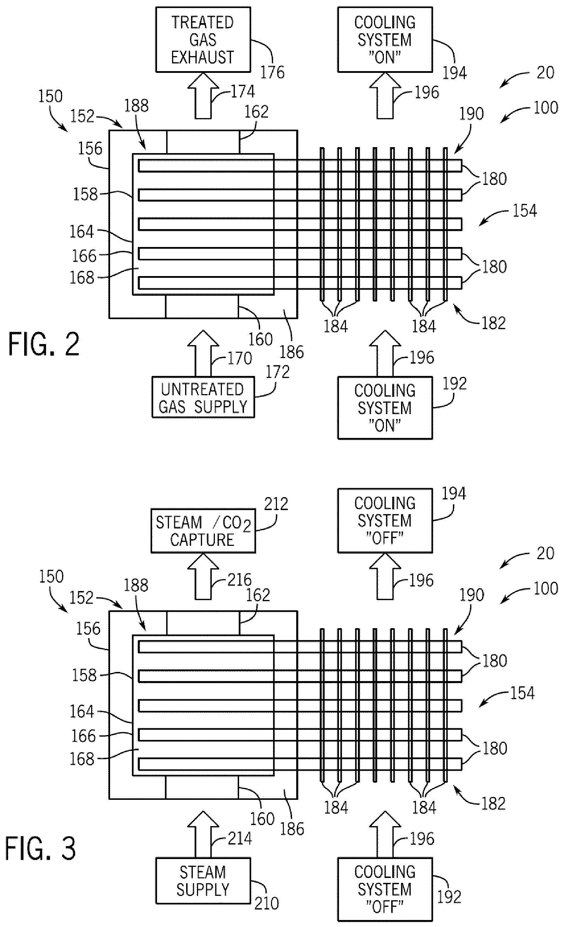

FIG. 2 is a schematic of an embodiment of the gas capture system 20 (e.g., carbon capture system 100) of FIG. 1, further illustrating an adsorption mode of a sorbent-based gas capture system 150 having a sorbent-based gas capture unit or adsorber 152 with a heat pipe array 154. In the illustrated embodiment, the adsorber 152 has a housing 156 disposed about an interior chamber 158, a fluid inlet 160, a fluid outlet 162, and a contactor assembly 164 disposed in the interior chamber 158. The contactor assembly 164 includes a plurality of contactor plates 166 (e.g., parallel plates) each having a sorbent material 168. The contactor plates 166 may be made of a thermally conductive material, such as metal. The sorbent material 168 may be disposed on an exterior surface and/or interior volume of the contactor plates 166, wherein the contactor plates 166 may have a porous surface and/or wall (e.g., perforated wall) to facilitate fluid flow in contact with the sorbent material 168. The sorbent material 168 may include porous, solid-phase materials, including mesoporous silicas, zeolites (e.g., aluminosilicates), and metal-organic frameworks (MOFs) and covalent organic frameworks (COFs). In the illustrated adsorption mode, the adsorber 152 is configured to receive an untreated gas 170 (e.g., untreated exhaust gas 62 and/or air) from an untreated gas supply 172 (e.g., gas turbine system 12 and/or HRSG 16), adsorb undesirable gases (e.g., CO₂) from the untreated gas 170 into the sorbent material 168, and discharge a treated gas 174 (e.g., treated exhaust gas 62 and/or air) with substantially less of the undesirable gases through a treated gas exhaust 176 (e.g., exhaust stack). Unfortunately, the adsorption process generates heat, which can reduce the adsorption capacity of the sorbent material 168. Accordingly, during the adsorption mode, the heat pipe array 154 cools the adsorber 152, particularly the sorbent material 168 of the contactor assembly 164, to help maintain and/or increase the adsorption capacity of the sorbent material 168.

The heat pipe array 154 includes a plurality of heat pipes 180 (e.g., equal to or greater than 5, 10, 20, 50, or 100 heat pipes 180) thermally and mechanically coupled to the contactor assembly 164 inside the housing 156 and a fin assembly 182 outside of the housing 156. The fin assembly 182 includes a plurality of fins 184 (e.g., parallel fins) made of a thermally conductive material, such as metal, bonded to the heat pipes by methods such as welding, brazing, or mechanical bonding. The heat pipes 180 extend through a wall 186 of the housing 156, such that an end portion 188 of the heat pipes 180 is inside the housing 156 and an end portion 190 is outside the housing 156. In certain embodiments, the heat pipes 180 are configured to transfer heat between the end portions 188 and 190. For example, in the illustrated adsorption mode, heat pipes 180 are configured to transfer heat from the end portion 188 coupled to the contactor assembly 164 to the end portion 190 coupled to the fin assembly 182. One or more cooling systems 192 and 194 are configured to force a cooling fluid flow 196 through the fin assembly 182 around the end portion 190 of the heat pipes 180 of the heat pipe array 154. In certain embodiments, the cooling systems 192 and 194 may include electric fans (e.g., electric motor driven fans) and the cooling fluid flow 196 may include an air flow (or other gas flow). In certain embodiments, the cooling systems 192 and 194 may include electric pumps (e.g., electric motor driven pumps) and the cooling fluid flow 196 may include a liquid coolant flow (e.g., water flow). In certain embodiments, the cooling systems 192 and/or 194 may be excluded, and the fin assembly 182 may passively transfer heat away from the heat pipes 180 into the ambient air by natural convection heat transfer.

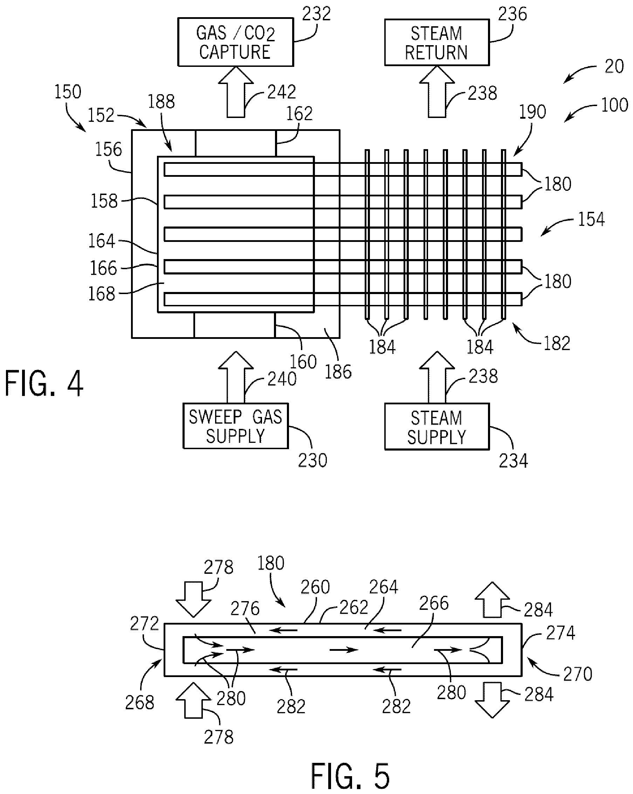

As discussed in further detail below, the heat pipes 180 may be designed to operate in a temperature range suitable for the adsorption mode. For example, during the adsorption mode, the temperature of the untreated gas 170 may be approximately 30 degrees Celsius, the heat pipes 180 may be heated up to approximately 40 degrees Celsius due to the adsorption process, and the cooling systems 192 and 194 may provide cooling (e.g., air cooling) of approximately 20 degrees Celsius. However, the temperatures may vary depending on the particular untreated gas supply 172, sorbent material 168, undesirable gas, cooling systems 192 and 194, and other aspects of the sorbent-based gas capture system 150. Once the sorbent material 168 is loaded with the undesirable gas (e.g., CO₂), then the controller 22 may be configured to change the operating mode of the sorbent-based gas capture system 150 from the adsorption mode of FIG. 2 to the desorption mode of either FIG. 3 or FIG. 4 as discussed in detail below.

FIG. 3 is a schematic of an embodiment of the gas capture system 20 (e.g., carbon capture system 100) of FIG. 1, further illustrating a desorption mode of the sorbent-based gas capture system 150 of FIG. 2. The sorbent-based gas capture system 150 is the same as described above with reference to FIG. 2. In the illustrated desorption mode, the sorbent-based gas capture system 150 includes a steam supply 210 fluidly coupled to the fluid inlet 160 of the adsorber 152 and a steam/CO₂ capture system 212 coupled to the fluid outlet 162 of the adsorber 152. During the desorption mode, the steam supply 210 is configured to supply a steam flow 214 through the adsorber 152 in contact with the sorbent material 168, thereby heating up the sorbent material 168 to a sufficient temperature range to cause desorption of the undesirable gases (e.g., CO₂) from the sorbent material 168 into the steam flow 214. For example, the steam flow 214 may have a temperature range of 100 to 150 degrees Celsius, such that the sorbent material 168 heats up to a temperature range of 100 to 150 degrees Celsius. The steam flow 214 carries away the desorbed gases (e.g., CO₂), such that the adsorber 152 discharges a steam/CO₂ flow 216 to the steam/CO₂ capture system 212. In certain embodiments, the steam/CO₂ capture system 212 may include a heat exchanger (e.g., condenser) configured to cool and condense the steam, thereby helping to separate the CO₂ from the steam. Additionally, in certain embodiments, the steam/CO₂ capture system 212 may include a vacuum system configured to help draw out the steam/CO₂ flow 216.

In the illustrated embodiment, the steam supply 210 is configured to directly heat the sorbent material 168 of the contactor assembly 164, rather than indirectly heating the sorbent material 168 via the heat pipe array 154. Additionally, the heat pipe array 154 is inactive in the illustrated embodiment of FIG. 3. For example, the controller 22 may control the cooling systems 192 and 194 to change from an "on mode" of FIG. 2 to an "off mode" of FIG. 3. Additionally, the heat pipe array 154 may be configured to switch from an "active mode" to an "inactive mode" by exceeding the operating temperature range (i.e. exceeding the design heat transfer limit at the operating temperature in desorption mode) of the heat pipes 180 when applying heat via the steam supply 210. For example, when supplying the steam flow 214 directly through the adsorber 152 in the temperature range suitable for desorption (e.g., 100 to 150 degrees Celsius), the steam flow 214 may overheat and cause a dry out (e.g., recoverable failure) of the heat pipe 180 wick, thereby causing the internal heat pipe cycle (e.g., vaporization and condensation between end portions 188 and 190) to stop operating until temperatures are later reduced to an acceptable operating temperature range (e.g., less than 50, 60, 70, 80, or 90 degrees Celsius) for normal heat pipe operation. By further example, if the steam flow 214 is approximately 150 degrees Celsius, then the heat pipes 180 may reach approximately 120 degrees Celsius, dry out, and stop operating. Accordingly, in the desorption mode of FIG. 3, the heat pipes 180 do not transfer heat away from the contactor assembly 164. Subsequently, after completion of the desorption mode of FIG. 3, the sorbent-based gas capture system 150 is configured to cool the heat pipe array 154 and the sorbent material 168 in preparation of another adsorption mode.

FIG. 4 is a schematic of an embodiment of the gas capture system 20 (e.g., carbon capture system 100) of FIG. 1, further illustrating a desorption mode of the sorbent-based gas capture system 150 of FIG. 2. The sorbent-based gas capture system 150 is the same as described above with reference to FIG. 2. In the illustrated desorption mode, the sorbent-based gas capture system 150 includes a sweep gas supply 230 fluidly coupled to the fluid inlet 160 of the adsorber 152 and a sweep gas/CO₂ capture system 232 coupled to the fluid outlet 162 of the adsorber 152. Additionally, the sorbent-based gas capture system 150 includes a steam supply 234 (e.g., upstream) and a steam return 236 (e.g., downstream) fluidly coupled to the fin assembly 152 and the end portion 190 of the heat pipes 180. In the illustrated desorption mode, the steam supply 234 is configured to force a steam flow 238 through the fin assembly 182 around the end portion 190 of the heat pipes 180 of the heat pipe array 154, thereby transferring heat through the heat pipes 180 from the end portion 190 to the end portion 188 coupled to the contactor assembly 164. In other words, the steam flow 238 indirectly heats the contactor assembly 164, including the sorbent material 168, via the heat pipes 180 of the heat pipe array 154. For example, the steam flow 238 may have a temperature range of 100 to 150 degrees Celsius, such that the sorbent material 168 heats up to a temperature range of 100 to 150 degrees Celsius. As heat is transferred through the heat pipes 180, the sorbent material 168 is heated to a sufficient temperature range (e.g., 100 to 150 degrees Celsius) to cause desorption of the undesirable gases (e.g., CO₂) from the sorbent material 168. Thus, the heat pipes 180 are active in the desorption mode of FIG. 4, whereas the heat pipes 180 are intentionally inactive in the desorption mode of FIG. 3.

As further illustrated in FIG. 4, the sweep gas supply 230 may be configured to supply a sweep gas flow 240 through the adsorber 152 to sweep up the desorbed gases (e.g., CO₂), such that a mixture of the sweep gas flow 240 and the desorbed gases discharge as a sweep gas/ CO₂ flow 242 to the sweep gas/ CO₂ capture system 232. In certain embodiments, the sweep gas flow 240 may include an inert gas, such as nitrogen. The sweep gas/ CO₂ capture system 232 may be configured to separate the sweep gas from the CO₂, thereby enabling gas capture of the CO₂ as the captured gas 112. Additionally, in certain embodiments, the sweep gas/ CO₂ capture system 232 may include a vacuum system configured to help draw out the sweep gas/ CO₂ flow 242. Subsequently, after completion of the desorption mode of FIG. 4, the sorbent-based gas capture system 150 is configured to cool the heat pipe array 154 and the sorbent material 168 in preparation of another adsorption mode.

FIG. 5 is a schematic of an embodiment of one of the heat pipes 180 in the heat pipe array 154 of the sorbent-based gas capture system 150 of FIGS. 2-4, further illustrating an operating cycle of the heat pipe 180. In the illustrated embodiment, the heat pipe 180 includes a hollow body 260 (e.g., hollow annular body) having an outer wall 262, a wick or wick layer 264 (e.g., heat pipe wick) disposed inside the hollow body 260 along an interior surface of the outer wall 262, and a central passage 266 disposed inside the wick layer 264. The heat pipe 180 also includes an evaporator section 268 and a condenser section 270 at opposite end portions 272 and 274 of the hollow body 260. The heat pipe 180 also contains a working fluid 276, which changes between a liquid phase and a vapor phase during a cycle in the heat pipe 180. For example, in the illustrated embodiment, the evaporator section 268 transfers heat from outside of the heat pipe 180 to the working fluid 276 as indicated by arrows 278, thereby vaporizing the working fluid 276 to generate a vapor flow 280 along the central passage 266 from the evaporator section 268 at the end portion 272 to the condenser section 270 at the end portion 274. Upon reaching the end portion 274, the condenser section 270 condenses the vapor flow 280 to generate a liquid flow 282 via heat transfer away from the working fluid 276 to an exterior of the heat pipe 180 as indicated by arrows 284. The liquid flow 282 then flows along the wick layer 264 from the condenser section 270 at the end portion 274 to the evaporator section 268 at the end portion 272. The cycle then repeats in the heat pipe 180.

In certain embodiments, the heat pipe 180 may be designed with an operating temperature range suitable for the adsorption mode of FIG. 2 and suitable for one of the desorption modes of FIGS. 3 and 4 as discussed above. For example, for the embodiment of FIGS. 2 and 3, the heat pipe 180 may be designed with heat pipe operating limits at the appropriate temperatures for adsorption and desorption modes such that the heat pipe is active for the adsorption mode and inactive for the desorption mode. This could be accomplished, for example, by designing the heat pipe to dry out the heat pipe wick layer 264 above a threshold temperature range. For example, the heat pipe 180 may dry out (e.g., recoverable failure) and become inactive with temperatures equal to or greater than 120, 130, 140, or 150 degrees Celsius. By further example, for the embodiment of FIGS. 2 and 4, the heat pipe 180 may be designed with an operating temperature range that is active for the adsorption mode (e.g., heat transfer in a first direction) and active for the desorption mode (e.g., heat transfer in a second direction opposite to the first direction). The working fluid 276 may include a variety of fluids depending on the particular embodiment, e.g., the embodiment of FIGS. 2 and 3 or the embodiment of FIGS. 2 and 4. For example, the working fluid 276 may include water, a mixture of water and one or more additives, organic solvents such as methanol or acetone, or other refrigerants (e.g., chlorofluorocarbon (CFC), hydrochlorofluorocarbon (HCFC), or hydrofluorocarbon (HFC) refrigerant). The heat pipe 180 may include a variety of dimensions, such as a 1 to 5 or 2 to 3 centimeters in diameter and 5 to 12 or 7 to 10 meters in length. Additionally, each heat pipe 180 in the heat pipe array 154 may be configured in a number of orientations with respect to gravity, including horizontal, nearly horizontal, vertical, or nearly vertical.

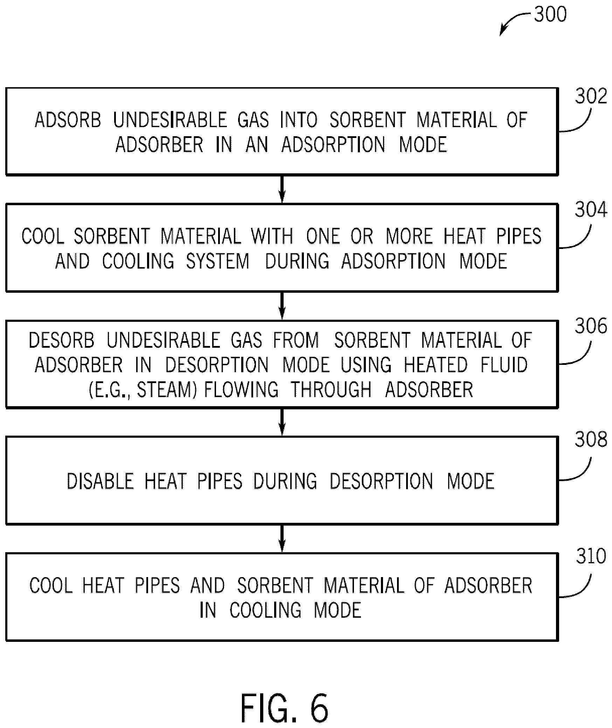

FIG. 6 is a flow chart of an embodiment of a process 300 for capturing an undesirable gas using the sorbent-based gas capture system 150 of FIGS. 2 and 3. In the illustrated embodiment, the process 300 may be partially or entirely controlled by the controller 22 of FIG. 1. The process 300 includes adsorbing an undesirable gas (e.g., CO₂) into a sorbent material 168 of an adsorber 152 in an adsorption mode (block 302). The process 300 also cools the sorbent material 168 with one or more heat pipes 180 and a cooling system 192, 194 during the desorption mode (block 304). The cooling provided by the heat pipes 180 and the cooling system 192, 194 helps to maintain or increase the adsorption capacity of the sorbent material 168. The process 300 then desorbs the undesirable gas (e.g., CO₂) from the sorbent material 168 of the adsorber 152 in a desorption mode using a heated fluid (e.g., steam) flowing through the adsorber 152 (block 306). The process 300 also disables the heat pipes 180 during the desorption mode (block 308). For example, the heated fluid (e.g., steam) may overheat and dry out (e.g., recoverable failure) the heat pipes 180, thereby causing the heat pipes 180 to be inactive and unable to transfer heat using the regular cycle inside the heat pipes 180. The process 300 then cools the heat pipes 180 and the sorbent material 168 of the adsorber 152 in a cooling mode prior to another adsorption mode (block 310).

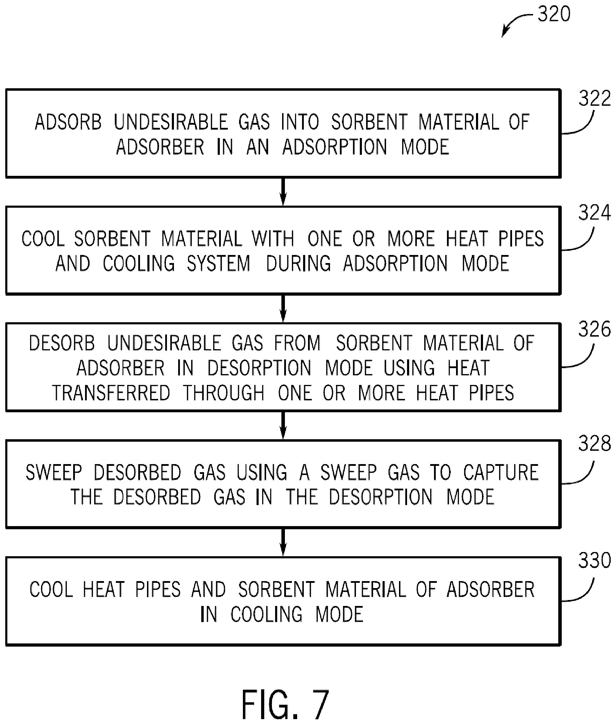

FIG. 7 is a flow chart of an embodiment of a process 320 for capturing an undesirable gas using the sorbent-based gas capture system 150 of FIGS. 2 and 4. In the illustrated embodiment, the process 320 may be partially or entirely controlled by the controller 22 of FIG. 1. The process 320 includes adsorbing an undesirable gas (e.g., CO₂) into a sorbent material 168 of an adsorber 152 in an adsorption mode (block 322). The process 320 also cools the sorbent material 168 with one or more heat pipes 180 and a cooling system 192, 194 during the desorption mode (block 324). The cooling provided by the heat pipes 180 and the cooling system 192, 194 helps to maintain or increase the adsorption capacity of the sorbent material 168. The process 320 then desorbs the undesirable gas (e.g., CO₂) from the sorbent material 168 of the adsorber 152 in a desorption mode using heat transferred through the one or more heat pipes 180 (block 326). For example, the heat pipes 180 may be heated outside of the adsorber 152 (e.g., via steam supply 234), thereby causing heat transfer through heat pipes 180 to the sorbent material 168 inside of the adsorber 152. The process 320 also sweeps the desorbed gas (e.g., CO₂) using a sweep gas to capture the desorbed gas in the desorption mode (block 328). The process 320 then cools the heat pipes 180 and the sorbent material 168 of the adsorber 152 in a cooling mode prior to another adsorption mode (block 330).

Technical effects of the disclosed embodiments enable sorbent-based gas capture (e.g., carbon capture of CO₂) using heat pipes to support the adsorption mode and/or the desorption mode. For example, the heat pipes may transfer heat away from a sorbent material of a sorbent-based gas capture unit or adsorber during an adsorption stage, thereby helping to maintain or increase an adsorption capacity of the adsorber while the adsorption process generates heat. By further example, the heat pipes may either inactivate during a desorption mode or transfer heat to the sorbent material to facilitate the desorption process. For example, if a heated fluid (e.g., steam) is directly applied to heat the sorbent material during the desorption mode, then the heat pipes may overheat and dry out (e.g., reversible failure) to avoid any cooling of the sorbent material. By further example, if a heated fluid (e.g., steam) is applied to heat the heat pipes outside of the adsorber, then the heat pipes transfer heat to the sorbent material inside of the adsorber. Thus, the heat pipes may support only the desorption mode, or both the adsorption and desorption modes.

The subject matter described in detail above may be defined by one or more clauses, as set forth below.

A system includes a gas capture system having an adsorber with a sorbent material, wherein the adsorber is configured to adsorb an undesirable gas from a gas flow into the sorbent material in an adsorption mode, and desorb the undesirable gas from the sorbent material in a desorption mode. The gas capture system further includes at least one heat pipe configured to transfer heat away from the sorbent material during the adsorption mode.

The system of the preceding clause, wherein the at least one heat pipe includes a plurality of heat pipes.

The system of any preceding clause, wherein the at least one heat pipe includes a working fluid including water, an organic solvent, or a refrigerant.

The system of any preceding clause, including a cooling system configured to cool a first end portion of the at least one heat pipe during the adsorption mode, and a second end portion of the at least one heat pipe is configured to cool the sorbent material during the adsorption mode.

The system of any preceding clause, wherein the cooling system includes one or more fans.

The system of any preceding clause, wherein a fin assembly is coupled to the first end portion of the at least one heat pipe.

The system of any preceding clause, wherein the at least one heat pipe is configured to transfer heat to the sorbent material during the desorption mode.

The system of any preceding clause, including a heat supply configured to heat a first end portion of the at least one heat pipe during the desorption mode, and a second end portion of the at least one heat pipe is configured to heat the sorbent material during the desorption mode.

The system of any preceding clause, wherein the heat supply includes a steam supply.

The system of any preceding clause, wherein the at least one heat pipe is configured to deactivate during the desorption mode.

The system of any preceding clause, including a heat supply configured to heat the sorbent material and cause the at least one heat pipe to overheat and deactivate during the desorption mode, wherein the heat is configured to desorb the undesirable gas from the sorbent material.

The system of any preceding clause, wherein the heat supply includes a steam supply.

The system of any preceding clause, wherein the undesirable gas includes carbon oxides.

The system of any preceding clause, wherein the gas flow includes an exhaust gas from a combustion system.

The system of any preceding clause, including a gas turbine system, a heat recovery steam generator (HRSG), or a combination thereof, upstream from the gas capture system, wherein the system further includes a controller having a processor, a memory, and instructions stored on the member and executable by the processor to control operating modes of the gas capture system in a sequence including the adsorption mode, the desorption mode, and a cooling mode.

A system includes a controller having a processor, a memory, and instructions stored on the member and executable by the processor to control a gas capture system having an adsorber to adsorb an undesirable gas from a gas flow into a sorbent material of the adsorber in an adsorption mode, wherein at least one heat pipe is configured to transfer heat away from the sorbent material during the adsorption mode. The processor is further configured to control the gas capture system to desorb the undesirable gas from the sorbent material in a desorption mode.

The system of the preceding clause, wherein the at least one heat pipe is configured to deactivate during the desorption mode while a heat supply heats the sorbent material, or the at least one heat pipe transfers heat to the sorbent material during the desorption mode.

A method includes adsorbing an undesirable gas from a gas flow into a sorbent material of an adsorber of a gas capture system in an adsorption mode, wherein at least one heat pipe is configured to transfer heat away from the sorbent material during the adsorption mode. The method further includes desorbing the undesirable gas from the sorbent material in a desorption mode.

The method of the preceding clause, including applying heat to the sorbent material with a heat supply during the desorption mode, and overheating the at least one heat pipe with the heat from the heat supply to cause a deactivation of the at least one heat pipe during the desorption mode.

The method of any preceding clause, including applying heat to a first end portion of the at least one heat pipe with a heat supply during the desorption mode, and transferring heat through the at least one heat pipe from the first end portion to a second end portion to heat the sorbent material during the desorption mode.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A system, comprising:
a gas capture system, comprising:
an adsorber having a sorbent material, wherein the adsorber is configured to adsorb an undesirable gas from a gas flow into the sorbent material in an adsorption mode, and desorb the undesirable gas from the sorbent material in a desorption mode;
at least one heat pipe configured to transfer heat away from the sorbent material during the adsorption mode.

2. The system of claim 1, wherein the at least one heat pipe comprises a plurality of heat pipes.

3. The system of claim 1, wherein the at least one heat pipe comprises a working fluid including water, an organic solvent, or a refrigerant.

4. The system of claim 1, comprising a cooling system configured to cool a first end portion of the at least one heat pipe during the adsorption mode, and a second end portion of the at least one heat pipe is configured to cool the sorbent material during the adsorption mode.

5. The system of claim 4, wherein the cooling system comprises one or more fans.

6. The system of claim 4, wherein a fin assembly is coupled to the first end portion of the at least one heat pipe.

7. The system of claim 1, wherein the at least one heat pipe is configured to transfer heat to the sorbent material during the desorption mode.

8. The system of claim 7, comprising a heat supply configured to heat a first end portion of the at least one heat pipe during the desorption mode, and a second end portion of the at least one heat pipe is configured to heat the sorbent material during the desorption mode.

9. The system of claim 8, wherein the heat supply comprises a steam supply.

10. The system of claim 1, wherein the at least one heat pipe is configured to deactivate during the desorption mode.

11. The system of claim 10, comprising a heat supply configured to heat the sorbent material and cause the at least one heat pipe to overheat and deactivate during the desorption mode, wherein the heat is configured to desorb the undesirable gas from the sorbent material.

12. The system of claim 11, wherein the heat supply comprises a steam supply.

13. The system of claim 1, wherein the undesirable gas comprises carbon oxides.

14. The system of claim 1, wherein the gas flow comprises an exhaust gas from a combustion system.

15. The system of claim 14, comprising a gas turbine system, a heat recovery steam generator (HRSG), or a combination thereof, upstream from the gas capture system, wherein the system further comprises a controller having a processor, a memory, and instructions stored on the member and executable by the processor to control operating modes of the gas capture system in a sequence including the adsorption mode, the desorption mode, and a cooling mode.
